# FASCICULE DE BREVET EUROPEEN

(11) **EP 2 571 809 B1**
(45) Date de publication et mention de la délivrance du brevet: **02.05.2018**
(21) Numéro de dépôt: 11728643.5
(22) Date de dépôt: 12.05.2011
(51) Int. Cl.: B82Y 40/00, G01T 1/185, C01B 35/02, G01T 3/00

(54) **PROCÉDÉ DE PRÉPARATION DE NANOPARTICULES DE BORE**
VERFAHREN ZUR BEREITSTELLUNG VON BORNANOPARTIKELN
METHOD FOR PROVIDING BORON NANOPARTICLES

(30) Priorité: 18.05.2010 FR 1053812
(43) Date de publication de la demande: 27.03.2013
(73) Titulaire: Onet Technologies ND, 13009 Marseille (FR)
(72) Inventeur: ROTTNER, Bernard, F-13009 Marseille (FR); PARTYKA, Stanislas, F-34830 Clapiers (FR)
(74) Mandataire: Debay, Yves
(86) Numéro de dépôt international: PCT/FR2011/051067
(87) Numéro de publication internationale: WO 2011/144844

(56) Documents cités:
- US-A1- 2003 213 917
- US-A1- 2008 260 952
- G. RISHA, E. BOYER, B. EVANS, K. KUO, R. MALEK: "Characterization of Nano-Sized Particles for Propulsion Applications", MAT. RES. SOC. SYMP. PROC., vol. 800, no. AA6.6.1, 2004, XP002660988,
- B. VAN DEVENER, J. P. L. PEREZ, S. L. ANDERSON: "Air-stable, unoxidized, hydrocarbon-dispersible boron nanoparticles", J. MATER. RES., vol. 24, no. 11, 1 novembre 2009 (2009-11-01), pages 3462-3464, XP002660989,
- WANG H ET AL: "Synthesis of Cu nanoparticles by hydrolysis of Mg2Cu", MATERIALS LETTERS, vol. 62, no. 19, 15 juillet 2008 (2008-07-15), pages 3331-3333, XP022682692, NORTH HOLLAND PUBLISHING COMPANY. AMSTERDAM, NL ISSN: 0167-577X, DOI: 10.1016/J.MATLET.2008.02.046 [extrait le 2008-02-23]
- A. PICKERING, C. MITTERBAUER, N. BROWNING, S. KAUZLARICH . P. POWER: "Room temperature synthesis of surface-functionalised boron nanoparticles", CHEMICAL COMMUNICATIONS, no. 1, 11 janvier 2007 (2007-01-11), pages 580-582, XP002660990, DOI: 10.1039/b614363f

## Description

La présente invention se rapporte à un procédé de préparation de nanoparticules de bore destinées aux appareils de détection de neutrons ou aux combustibles de missiles, ou à toute autre application et à un procédé de dépôt d'une couche solide de bore pour un tel appareil de détection de neutrons.

Elle peut s'utiliser dans un appareil de détection de neutrons, du type compteur proportionnel à gaz ou chambre d'ionisation comportant des couches solides de bore, destiné à équiper des systèmes de mesure de neutrons.

Plus particulièrement, un domaine technique de l'invention est celui de la détection de neutrons issus d'une ou plusieurs sources émettrices de neutrons.

L'invention peut aussi s'utiliser dans les systèmes de propulsion de missiles. Plus particulièrement, un domaine technique de l'invention est celui des combustibles de missiles.

L'invention s'applique particulièrement, c'est-à-dire non limitativement, d'une part à la détection de neutrons issus de containers ou fûts de déchets radioactifs en provenance de centrales ou usines nucléaires, d'autre part à la surveillance des matières fissiles.

Les neutrons thermiques peuvent être détectés par réaction nucléaire avec des isotopes présentant les propriétés suivantes :
- isotope stable (non radioactif).
- grande section efficace de la réaction neutron-isotope ; (la section efficace est proportionnelle à la probabilité d'interaction du neutron avec le noyau de l'isotope considéré).
- la réaction neutron-isotope doit être émettrice d'une particule chargée telle qu'un proton ou un noyau léger, comme par exemple une particule alpha.

Les isotopes réunissant ces conditions sont peu nombreux : hélium 3 (³He), lithium 6 (⁶Li) et bore 10 (¹⁰B).

Il est classique, pour des raisons de rendement et d'efficacité, d'employer des systèmes de mesure de neutrons mettant en oeuvre en tant qu'appareil de détection de neutrons des tubes remplis d'hélium 3 (³He).

Cependant, de tels tubes remplis d'hélium 3 deviennent rares et coûteux, à cause d'une pénurie mondiale d'hélium 3. En effet, l'hélium 3 est généralement produit par décroissance radioactive du tritium, constituant ainsi un sous-produit de l'épuration du tritium. Or, les sources principales de tritium sont les stocks d'armes thermonucléaires. Du fait des accords internationaux de limitation et de non prolifération des armes thermonucléaires, une pénurie actuelle et durable d'hélium 3 s'impose aux fabricants d'appareils de détection de neutrons.

Compte tenu de la pénurie d'hélium 3, restent le lithium 6 et le bore 10 pour ces fabricants d'appareils de détection de neutrons.

Le bore 10 est cependant préférable au lithium 6 parce que, d'une part, sa section efficace est plus grande (section efficace de 3837 barns pour le bore 10 contre 940 barns pour le lithium 6, avec pour indication une section efficace de 5327 barns pour l'hélium 3) et, d'autre part, le bore 10 est chimiquement stable sous sa forme élémentaire dans les conditions ordinaires, contrairement au lithium 6 qui réagit spontanément avec l'eau et l'air.

La réaction R1 permettant la détection des neutrons avec du bore 10 est la suivante :

Neutron + ¹⁰B → ⁷Li + alpha (⁴He) + E [R1],

où E correspond à l'énergie libérée lors de la réaction R1 ; dans environ 94 % des cas, E est égale à 2,31 MeV, tandis que dans 6% des cas E est égale à 2,79 MeV au lieu de 2,31 MeV.

Pour réaliser la détection finale des neutrons, il est classique d'employer des appareils de détection du type compteur proportionnel à gaz dont le principe de fonctionnement est le suivant : les particules alpha et ⁷Li dans le cas du ¹⁰B issues de la réaction R1 ionisent un gaz contenu dans une cavité du compteur proportionnel à gaz et perdent ainsi leurs énergies respectives, tout en générant des électrons secondaires. Par ailleurs, un champ d'électrons intense est formé dans cette cavité par application d'une haute tension entre une anode s'étendant en partie dans cette cavité et une cathode constituant en général la paroi de la cavité. Le rayon de courbure de l'anode est en général faible, moins de 100 µm, de manière à produire un champ électrique intense avec de relativement faibles différences de potentiel. Les électrons secondaires provoquent une amplification dans le gaz avec ce champ d'électrons, ce qui conduit à l'accroissement de la charge. Ces électrons sont collectés au niveau de l'anode et les ions sont collectés au niveau de l'enceinte délimitant cette cavité, ladite enceinte formant une cathode, produisant ainsi des signaux impulsionnels dans l'anode. L'appareil de détection mesure alors le nombre de neutrons par comptage du nombre des signaux impulsionnels.

Le bore a déjà été utilisé pour la détection de neutrons, même antérieurement au début de pénurie de l'hélium 3, et son emploi réapparaît depuis la pénurie d'hélium 3.

Pour cette application de détection des neutrons, le bore est classiquement employé sous forme gazeuse, notamment sous la forme de tri-fluorure de bore (BF₃), à l'intérieur de compteurs proportionnels à gaz réalisés sous la forme de tubes semblables aux tubes d'hélium 3 décrit ci-dessus, au gaz de remplissage près.

Cependant, ces appareils de détection de neutrons du type compteur proportionnel à gaz remplis de composé de bore gazeux, présentent deux principaux inconvénients.

Un premier inconvénient réside dans la haute toxicité du tri-fluorure de bore qui engendre des risques en cas de percement ou détérioration de l'appareil. Pour pallier à ce défaut, il est d'usage d'entourer les tubes remplis de tri-fluorure de bore gazeux par un absorbant spécifique, mais non seulement le risque de fuite n'est pas totalement écarté mais aussi la présence de cet absorbant augmente le coût et complexifie la conception du système de mesure.

Le rendement d'un appareil de détection (détecteur) de neutrons est défini par le rapport du nombre de détections au nombre de neutrons incidents sur cet appareil, et l'efficacité d'un dispositif de mesure de déchets ou de matières fissile (système de mesure intégrant un ou plusieurs détecteurs) est définie par le rapport du nombre de détections au nombre de neutrons émis par l'objet à caractériser, Ces deux valeurs, rendement et efficacité, sont bien entendu liées, mais elles sont en général différentes à cause de, notamment :
- absorptions de neutrons à l'intérieur de l'objet à mesurer ou dans les matériaux entre l'objet à mesurer et le ou les appareils de détection ;
- surface interne de la cavité de détection de l'appareil de détection incomplètement recouvertes de détecteurs ;
- réflexion des neutrons ayant traversé les appareils de détections.

Un second inconvénient des appareils de détection de neutrons du type compteur proportionnel composé de bore gazeux connus réside dans le faible rendement des tubes remplis de tri-fluorure de bore gazeux. Il est possible de pallier à ce défaut, d'une part, en utilisant du tri-fluorure de bore enrichi en bore 10, à 90 % voire plus, et, d'autre part, en augmentant le nombre de tubes par rapport à un appareil employant des tubes remplis d'hélium 3. Toutefois, l'enrichissement en bore 10 ne suffit pas à retrouver les caractéristiques d'un tube rempli d'hélium 3 (il s'en faut d'un facteur 3 environ) et les tubes remplis de tri-fluorure de bore gazeux enrichi en bore 10 ne sont pas commercialement disponibles.

La mise en oeuvre d'appareils de détection de neutron employant du bore sous forme solide a également été proposée, notamment sous la forme de dépôts solides de bore sur les surfaces internes d'un compteur proportionnel à gaz.

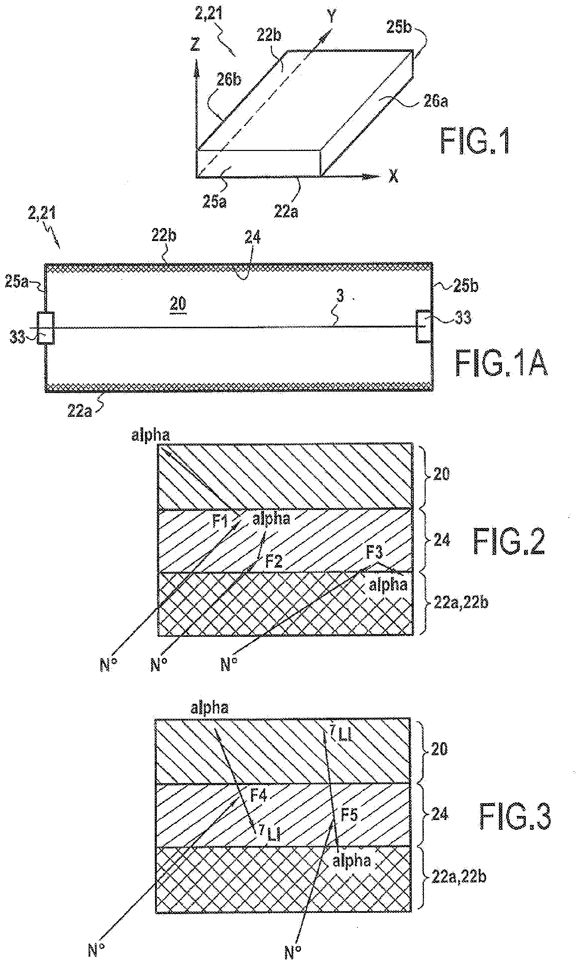

Les figures 1 et 1A illustrent un tel appareil connu de détection de neutrons du type compteur proportionnel à gaz, comportant :
- une enceinte 2 en métal formant cathode, ladite enceinte 2 délimitant une cavité 20 remplie d'un gaz, ladite enceinte étant constituée d'un corps creux 21 parallélépipédique comprenant 2 parois principales parallèles 22a 22b reliées entre elles au niveau de leur bord respectif en vis-à-vis par des premières parois latérales transversales 25a et 25b et des deuxièmes parois latérales longitudinales 26a et 26b. Lesdites parois principales 22a et 22b présentent 2 surfaces internes recouvertes d'une couche solide 24 de bore ou d'un composé de bore tel carbure ou nitrure de bore, et
- une anode 3 s'étendant en partie à l'intérieur de l'enceinte et isolée électriquement de celle-ci par des plots 33.

Le gaz à l'intérieur de l'enceinte est généralement un mélange gazeux Argon (Ar) / Dioxyde de carbone (CO₂) en proportion 90 / 10 et l'appareil comprend généralement un circuit de gaz ouvert pour assurer un renouvellement permanent du mélange gazeux à l'intérieur de l'enceinte.

L'anode est classiquement un fil métallique, tel que du tungstène, de faible diamètre, généralement inférieur à 100 µm. Un générateur de tension applique une haute-tension aux bornes de l'anode, dont la valeur dépend du diamètre de l'anode, avec par exemple une tension d'environ 500 V pour un diamètre de l'ordre de 10 µm et une tension d'environ 1000 V ou plus pour un diamètre de l'ordre de 100 µm.

La figure 2 illustre trois phénomènes distincts d'émission d'une particule alpha (⁴He) pouvant apparaître dans un appareil de détection de neutrons du type compteur proportionnel à gaz, à savoir :
- un premier phénomène, illustré par les flèches F1, dans lequel le neutron N traverse le corps creux 21 de l'enceinte métallique pour réagir avec un bore 10 de la couche 24 solide de bore, conformément à la réaction R1 décrite ci-dessus, et émettre une particule alpha qui est émise en direction de la cavité 20 avec une vitesse suffisante pour entrer dans cette cavité 20 et réagir avec le mélange gazeux pour permettre !a détection souhaitée comme décrit précédemment ;
- un deuxième phénomène, illustré par les flèches F2, dans lequel le neutron N traverse le corps creux 21 de l'enceinte métallique pour réagir avec un bore 10 de la couche 24 solide de bore, conformément à la réaction R1 décrite ci-dessus, et émettre une particule alpha qui est émise en direction de la cavité 20 avec une vitesse insuffisante pour pouvoir traverser la couche 24 et atteindre la cavité 20, de sorte qu'un neutron a été consommé dans la couche 24 sans pour autant être détecté ;
- un troisième phénomène, illustré par les flèches F3, dans lequel !e neutron N traverse le corps creux 21 de l'enceinte métallique pour réagir avec un bore 10 de la couche 24 solide de bore, conformément à la réaction R1 décrite ci-dessus, et émettre une particule alpha qui est émise dans la direction opposée à la cavité 20 de sorte que la particule n'atteint pas la cavité 20.

Quand on souhaite améliorer l'efficacité du système de mesure, il faut pour cela limiter la consommation inutile de neutrons, c'est-à-dire que pour presque 100 % des réactions R1 une particule chargée doit atteindre le gaz afin d'être détectée. Pour cela, il ne faut pas seulement considérer la particule alpha (⁴He) émise par la réaction R1, mais aussi le noyau de lithium 7 (⁷Li), pour réaliser cette détection, car les deux particules alpha et ⁷Li peuvent ioniser le mélange gazeux contenu dans la cavité 20 comme décrit précédemment.

Comme illustré sur la figure 3, selon les lois de la cinématique, les particules alpha et ⁷Li sont émises l'une à l'opposé de l'autre, et il est théoriquement possible de détecter chaque capture de neutron selon la réaction R1 :
- soit la particule alpha part dans la bonne direction (direction de la cavité 20) et alors le noyau de lithium 7 (⁷Li) part dans la direction opposée à la cavité 20, comme schématisé par les flèches F4, et dans ce cas c'est la particule alpha qui est détectée ;
- soit le noyau de lithium 7 (⁷Li) part dans la bonne direction (direction de la cavité 20) et alors la particule alpha part dans la direction opposée à la cavité 105, comme schématisé par les flèches F5, et dans ce cas c'est le noyau de lithium 7 qui est détecté, sauf si ce noyau est émis avec une vitesse insuffisante pour pouvoir traverser la couche 24 et atteindre la cavité 20 (deuxième phénomène équivalent pour le noyau de lithium 7).

En théorie, une particule alpha sur deux est émise dans la bonne direction et donc un noyau de lithium 7 est émis dans la bonne direction de sorte que, pour 100 neutrons entrant dans le compteur proportionnel à gaz, la réaction R1 engendre 50 particules alpha émise dans la cavité du compteur proportionnel à gaz et 50 noyaux de lithium 7 émis dans cette même cavité, sans compter bien entendu les particules absorbées dans l'épaisseur de la couche solide de bore faute de vitesse suffisante (deuxième phénomène).

Tous les compteurs proportionnels à gaz employant des couches solides de bore permettent la détection d'une partie des noyaux de lithium 7, mais si l'on veut approcher un rendement de détection des neutrons égal à 100% avec la réaction R1, il faut pouvoir détecter presque tous les noyaux de lithium 7 émis vers le gaz, en plus des particules alpha.

La détection des noyaux de lithium 7 dans le gaz du compteur proportionnel à gaz impose une couche solide de bore de très faible densité surfacique. Ainsi, une densité surfacique de la couche solide de bore (ou composé de bore) d'environ 0,2 mg/cm² permet de détecter 37 % des noyaux de lithium 7 produit lors de la réaction R1, ce qui est sensiblement équivalent à 75% des noyaux de lithium 7 émis dans la bonne direction, mais présente en contrepartie un rendement de détection des neutrons qui est très faible (6% pour deux couches solides de bore de densité surfacique égale à 0,2 mg/cm²).

De manière générale, l'inconvénient de ce type d'appareil de détection est son faible rendement qui ne dépasse pas les 10%. Ce rendement maximal de 10% est une limite physique liée à la technique employée dans cet appareil de détection, Il n'est en effet pas possible d'augmenter le rendement de l'appareil en augmentant l'épaisseur de la couche solide de bore, parce qu'alors les particules chargées (particules alpha ou noyaux de lithium 7) n'atteignent plus le gaz où elles sont détectées, et des neutrons sont alors consommés inutilement (cas du deuxième phénomène).

Les documents US 2005/0258373 et WO2004043372 décrivent des appareils de détection de neutrons permettant de dépasser cette limite physique de rendement de 10%, en employant un faisceau de tubes de détection de faible diamètre (environ 4 mm de diamètre). Chaque tube de détection constitue un compteur proportionnel à gaz, avec une anode centrale et un dépôt de bore sur sa surface interne, en l'occurrence un dépôt de carbure de bore. Le rendement de chaque tube de détection est bien inférieur à 10%, mais le rendement du faisceau de tubes peut dépasser 50%. Ainsi, ces appareils connus obtiennent de bons rendements avec des couches solides minces de bore, grâce à cette pluralité de tubes de détection.

Un premier but est de fournir un procédé de préparation de nanoparticules de bore. La publication scientifique "Air-stable, unoxidized, hydrocarbon-dispersible boron nanoparticles", J. Mater. Res., Vol. 24, No. 11, pages 3462 - 3464, décrit un procédé de préparation de nanoparticules de bore par broyage de particules de bore (diamètre moyen 800 nm) dans un broyeur à billes en présence d'hexane et d'acide oléique.

Pour réaliser une couche solide de bore d'épaisseur constante à partir de poudre de bore, il faut que la granulométrie de la poudre soit inférieure à l'épaisseur de la couche solide de bore. Or, une couche solide de bore présentant une densité surfacique 0,2 mg/cm² correspond à une couche solide de bore d'épaisseur environ 1 µm. Il est donc avantageux de réaliser les couches solides de bore avec de telles nanoparticules, étant entendu que ces nanoparticules présentent des dimensions nanométriques inférieures à 0,8 µm, de préférence inférieure à 0,3 µm.

L'invention se rapporte également à un procédé de préparation des nanoparticules de bore particulièrement avantageux en ce qu'elle permet de réaliser les nanoparticules de bore de granulométrie inférieure à 0,8 µm, de préférence inférieure à 0,3 µm, sachant que les poudres de bore disponibles dans le commerce ont actuellement une granulométrie autour de 30 µm, et que le bore est particulièrement dur (juste au-dessous du diamant dans l'échelle des duretés), donc difficile à broyer.

Dans une réalisation particulière de ce procédé, l'étape a) de préparation des nanoparticules de bore comporte les étapes suivantes de :
a-1) synthèse d'un composé intermétallique bore/lithium (LiB) par réaction d'un mélange de bore et de lithium dans un réacteur, de préférence sous vide et sous un chauffage de l'ordre de 650°C voir plus loin notamment pendant 6 heures ; et
a-2) transfert et hydrolyse du composé intermétallique bore/lithium afin de réaliser des nanoparticules de bore, de préférence par immersion dans un bain contenant de l'eau à température ambiante, sous atmosphère de gaz neutre tel que de l'argon, l'hydrolyse étant caractérisée en ce que le bain d'hydrolyse est soumis à des ultrasons ; et
a-3) séparation des nanoparticules de bore, notamment par filtration et/ou centrifugation, avec les autres composés issus de la réaction d'hydrolyse. De préférence, la séparation des nanoparticules est réalisée par filtration tangentielle. La solution obtenue après hydrolyse est donc filtrée à travers une ou des membranes minérales tubulaires, par exemple, de longueur 25 mm, de diamètre interne de 8 mm et de surface membranaire efficace de 40 cm². La ou les membranes peuvent être, par exemple, en alumine avec une couche filtrante en oxyde de zirconium d'épaisseur 15 µm. La solution obtenue après chaque filtration peut être rediluée dans de l'eau distillée pour être refiltrée. Ainsi, 2 à 4 passes de filtration, par exemple, peuvent être effectuées. La filtration permet de concentrer les NPB d'un facteur 20 environ, sans concentrer la lithine ou hydroxyde de lithium (LiOH) qui est un sous produit de la synthèse des NPB. La dilution du concentrât, contenant les NPB, dans l'eau distillée permet de diminuer d'un facteur 20 la concentration de lithine. Deux passes de filtration/dilution dans l'eau distillée permettent de diminuer d'un facteur 400 la concentration de lithine, trois passes d'un facteur 8000, quatre passes d'un facteur 160 000, etc.

De préférence, selon une autre caractéristique du procédé :
- à l'étape a-1) la proportion de bore dans le mélange bore lithium introduit dans ledit réacteur est comprise entre 39 et 50%, et
- à l'étape a-2) on réalise un barbotage de gaz neutre de préférence d'argon dans le bain d'hydrolyse.

Plus particulièrement à l'étape a-1), le composé intermétallique bore/lithium ainsi synthétisé a une formule chimique approximative Li_{1,06}B, et se présente sous la forme d'une éponge, l'excès de lithium emplissant les pores de l'éponge et protégeant l'alliage de l'oxydation lors de l'ouverture du réacteur.

Plus particulièrement encore, à l'étape a-2), après refroidissement du réacteur, on ouvre le réacteur et on verse l'alliage dans un bain d'eau froide, ce qui conduit à une hydrolyse de l'alliage bore/lithium afin de réaliser des nanoparticules de bore. Cette réaction d'hydrolyse spontanée et exothermique avec l'eau est la suivante : LixB + xH₂O → B + xLiOH + x/2H₂ + traces de différents boranes.

À l'étape a-3), on réalise la séparation des nanoparticules de bore, afin d'éliminer les espèces collatérales et non désirables issues de la réaction de la synthèse des nanoparticules de bore tels que LiOH, dispersants et boranes.

Dans un mode préféré de réalisation, à l'étape a-2) on utilise avantageusement un bain contenant de l'eau et un agent dispersant, notamment à une concentration massique de 50 à 1000 ppm, pour limiter la croissance des nanoparticules de bore, de sorte que l'on obtienne des nanoparticules de bore dont la grande dimension moyenne se situe entre 250 et 800 nanomètres.

On utilisera plus particulièrement un agent dispersant anionique de la société COATEX sous la référence GXCE ou encore un agent dispersant couplé d'un agent tensioactif non ionique de type polypropylène-polyoxyéthylène.

L'agent dispersant permet de réduire quelque peu la taille des particules (facteur 2), mais l'absence totale d'agent dispersant aboutit à la production de particules de taille encore acceptable en quantité suffisante. À l'étape a-2), le bain d'hydrolyse est soumis à des ultrasons, afin de réduire la taille des nanoparticules. Une densité de puissance ultrasonique supérieur à 100 W/L, de préférence de l'ordre de 350 W/L permet de réduire la taille des nanoparticules entre 200 nm et 300 nm. Un système de refroidissement doit alors être ajouté pour évacuer la chaleur générée par la puissance ultrasonore. Ce système de refroidissement est, par exemple, un système permettant un bain-marie ou un bullage par un gaz neutre.

Dans un mode préféré de réalisation, à l'étape a-2) on réalise un fort bullage de gaz inerte, de préférence argon, dans le bain d'hydrolyse. Les avantages de ce bullage sont multiples : limitation de la production de borane, évacuation de la chaleur, homogénéisation du bain.

Plus particulièrement, à l'issue de l'étape a-3), selon la puissance des ultrasons injectés, lesdites nanoparticules de bore présentent une taille de 100 nm à 800 nm et lesdites nanoparticules sont des particules poreuses, d'une porosité de l'ordre de 50 % ou de plus de 30%.

L'étape a-3) peut être suivie d'une étape de broyage mécanique pour réduire la dimension des NPB comprenant au moins :
- une étape de séchage des NPB par évaporation sous vide ;
- une étape de mise en suspension des NPB dans un solvant non oxygéné ;
- une étape de broyage des NPB dans le solvant non oxygéné, par exemple, dans un broyeur planétaire ;
- une étape de séchage des NPB par évaporation sous vide.

Le solvant non oxygéné peut être du cyclohexane par exemple.

Du fait que les nanoparticules sont poreuses, leur taille en « équivalent bore massif » doit être diminuée proportionnellement à leur porosité, Ainsi, pour une porosité de 50% les nanoparticules de 0,8 µm ont une granulométrie effective en équivalent bore massif inférieure à 0,4 µm.

Enfin, le procédé peut comprendre une dernière étape de contrôle de la quantité de nanoparticules de bore déposées sur le support par pesée différentielle.

Un autre but est de proposer une utilisation des nanoparticules de bore comme adjuvant dans un combustible pour missiles et mélangées dans une proportion déterminée avec la poudre de combustion.

Un autre but de la présente invention est de fournir un procédé de dépôt d'une couche solide de bore à partir de ces nanoparticules sur un support pour un appareil de détection de neutrons, qui permette d'obtenir des couches solides de bore avec une épaisseur maîtrisée qui permette d'atteindre les objectifs de rendement fixés pour l'appareil.

L'invention se rapporte également à un procédé de dépôt d'une couche solide de bore sur un support constitué de préférence d'une dite paroi ou surface pour la préparation d'une dite paroi ou surface recouverte d'une dite couche solide borée d'un appareil de détection de neutrons, ce procédé comportant les étapes suivantes :
a) préparation de nanoparticules de bore de granulométrie inférieure à 0,8 µm, de préférence inférieure à 0,3 µm ;
b) fabrication d'une suspension borée par mise en suspension des nanoparticules de bore dans un solvant volatil de préférence de l'éthanol ou acétone, et de préférence encore ajout d'un agent tensioactif ;
c) dépôt ou projection sur ledit support d'un film liquide de ladite suspension borée ; et
d) séchage de ladite suspension borée, notamment par chauffage.

Le procédé de dépôt d'une couche de bore selon l'invention est donc utile pour la préparation d'un appareil de détection selon l'invention et plus particulièrement pour la préparation d'une dite paroi principale ou dite paroi intercalaire d'un dit appareil de détection selon l'invention.

Ce procédé vise à réaliser des couches solides de bore présentant une épaisseur (ou densité surfacique) faible et maîtrisée, dans le but d'ajuster le détecteur à l'optimum choisi, entre rendement et pertes de neutrons.

À l'étape b, la caractéristique recherchée pour le solvant volatile est l'évaporation aisée, l'acétone étant meilleure de ce point de vue que l'éthanol, et l'eau moins volatile, mais plus inoffensive.

À l'étape b, l'ajout d'un agent tensioactif, notamment dans une proportion inférieure à 5% de la masse de bore, permet d'assurer un dépôt homogène et d'améliorer l'adhérence des nanoparticules sur la surface du support.

De préférence, aux étapes c) et d), on chauffera préalablement le support, puis on projettera la suspension borée sur ce support chaud, de manière à ce qu'elle sèche quasi immédiatement, sans que la suspension borée n'ait le temps de couler latéralement.

Le nouveau procédé de fabrication et de dépose de dite nanoparticules de bore selon l'invention présente un rendement de production de dites nanoparticules de bore (ci-après « NPB ») d'au moins 80%, voire d'au moins 90%. Après avoir réalisé de nombreux essais se soldant par un rendement déplorable (<30%), les inventeurs ont pu obtenir des rendements de l'ordre de 90% et plus grâce notamment aux caractéristiques suivantes :
- Transfert du réacteur de la synthèse de l'étape a-1) à celui de l'hydrolyse de l'étape a-2) sous atmosphère inerte, et conservation de cette atmosphère inerte dans le ciel du réacteur d'hydrolyse, laquelle atmosphère évite les oxydations parasites du composé intermétallique LiB au contact de l'oxygène de l'air, et
- Une limitation à moins de 50% de la proportion massique du lithium lors de la réaction Li-B de l'étape a-1). Le lithium excédentaire (par rapport à la stoechiométrie LiB correspondant à une teneur en lithium de 39% en masse) se place dans les interstices de l'enchevêtrement de nanofils de composé intermétallique de LiB, et protège le LiB de l'oxydation. Les inventeurs ont découvert qu'un excès de Li n'est pas favorable au rendement de production de NPB et que le dégagement d'hydrogène lors de l'hydrolyse du Li favorise la production de boranes, au détriment de celle de NPB.
- Un barbotage par un gaz neutre tel que l'argon lors de l'hydrolyse, permet d'entraîner l'hydrogène, et d'éviter la formation de boranes.

D'autres procédés connus de dépôt d'une couche solide de bore sur un support sont envisageables, tels que :
- dépôt par pulvérisation cathodique décrit plus loin dans la description,
- dépôt en phase vapeur : vaporisation de bore 10, puis condensation sur le support,
- dépôt par dissociation de boranes (composés gazeux de bore et d'hydrogène, explosif).

Le nouveau procédé de dépôt de nanoparticules selon l'invention présente l'avantage d'économiser !a matière première (pertes de moins de 20% contre plus de 60%) dont le prix est de l'ordre de 50 €/g. Pour l'ensemble de mesure avec une efficacité de 40% décrit en exemple, si les pertes en bore 10 sont de 80%, le coût de la matière première bore 10 sera de 90 000 €, contre 23 000 € avec les nanoparticules.

L'invention vise également, une utilisation du procédé dans un appareil de détection de neutrons du type compteur proportionnel à gaz, ou chambre d'ionisation comportant :
- une enceinte formant cathode, ladite enceinte étant remplie d'un gaz et comportant un corps creux comprenant 2 parois principales reliées entre elles par des parois latérales, lesdites 2 parois principales présentant respectivement deux surfaces internes sensiblement parallèles entre elles et recouvertes chacune d'une couche solide contenant du bore ou un composé du bore ci-après dénommée couche solide borée ; et un dispositif formant anode s'étendant à l'intérieur de ladite enceinte ;
- ledit appareil étant caractérisé en ce qu'il comprend en outre au moins une paroi intercalaire formant cathode, fixée sur lesdites parois latérales et s'étendant à l'intérieur de ladite enceinte de façon sensiblement parallèle aux dites surfaces internes du corps creux, la ou chaque paroi intercalaire présentant deux surfaces opposées en regard des surfaces internes respectives des 2 dites parois principales du corps creux et recouvertes chacune d'une couche solide contenant du bore ou un composé du bore, et en ce que le dispositif formant anode présente au moins une partie s'étendant dans un espace entre la paroi intercalaire et l'une des surfaces internes d'une première paroi principale du corps creux et au moins une autre partie s'étendant dans un autre espace entre la paroi intercalaire et l'autre surface interne de la deuxième paroi principale du corps creux.

Un tel appareil comportant, à l'intérieur même de l'enceinte, une ou plusieurs parois intercalaires recevant chacune deux couches solides borées permet ainsi d'améliorer le rendement de l'appareil en multipliant de façon efficace le nombre de couches solides borée tout en ayant desdites couches solides borées de faibles épaisseurs ou de faibles densités surfaciques sachant que, pour rappel, il faut réaliser des couches solides borées relativement minces pour minimiser les pertes.

Selon une autre caractéristique, les couches solides borées (contenant du bore ou composé de bore) présentent une densité surfacique comprise entre environ 0,03 et environ 0,5 mg/cm².

Plus ladite couche solide borée est épaisse, plus ses pertes de neutrons sont importantes ; étant entendu que les pertes de neutrons correspondent à la proportion des neutrons incidents capturés, mais non détectés ; les pertes étant estimées à partir du rendement théorique qu'apporterait la quantité de bore 10 présente.

Ainsi, selon la présente invention, pour minimiser les pertes, il est avantageux de réaliser des couches solides de bore qui soient minces, tout en compensant cette minceur par un accroissement du nombre de couches borée par un accroissement du nombre de parois intercalaires afin de garantir le rendement souhaité.

Préférentiellement, les couches solides borées sont réalisées à base de bore élémentaire. L'appareil présente un meilleur rendement en utilisant du bore élémentaire, plutôt qu'un composé chimique tel que le carbure de bore (B₄C), le nitrure de bore (BN) ou l'anhydride borique (B₂O₃).

Avantageusement, lesdites couches solides borées sont essentiellement constituées de bore, dans une proportion comprise entre 70% et 100%. Avantageusement encore, lesdites couches solides borées sont essentiellement constituées de bore 10, avec de préférence une teneur en bore 10 comprise entre environ 70% et 100%, afin d'améliorer le rendement de l'appareil.

On trouve par exemple dans le commerce du bore dit « enrichi en bore 10 » dont la teneur en bore 10 est supérieure à 99%.

Plus particulièrement, les couches solides borées présentent une densité surfacique comprise entre environ 0,03 et environ 0,5 mg/cm², et lesdites parois principales et parois latérales, et/ou la ou chaque dite paroi intercalaire sont réalisées dans un matériau dont le numéro atomique est inférieur à 20, notamment un matériau plastique ou métallique, ledit matériau étant un matériau conducteur, de préférence de l'aluminium, ou ladite couche solide borée étant recouverte d'un couche de métal, de préférence en aluminium, de préférence encore de densité surfacique inférieur à 0,01 mg/cm².

On peut de couvrir également de bore les parois latérales pour augmenter légèrement le rendement.

L'avantage d'un matériau dont le numéro atomique est inférieur à 20, de préférence, est double : moins de sensibilité au rayonnement gamma et moins de sensibilité au rayonnement cosmique susceptible d'arracher d'un noyau lourd jusqu'à une dizaine de neutrons. Et, ladite couche métallique améliore la conductivité, ce qui améliore le comportement du détecteur à fort taux de comptage.

Le dispositif formant anode peut donc être constitué d'une anode unique réalisé d'un seul tenant avec des parties d'anode solidaires les unes des autres qui parcourt l'ensemble de l'enceinte. Toutefois, les limitations de l'électronique, ou bien des applications à fort taux de comptage ou nécessitant la localisation des neutrons, peuvent imposer de diviser la cathode en plusieurs, voire une multitude d'anodes distinctes ; ces anodes divisées pouvant se présenter sous la forme de brins ou tiges métalliques.

Selon une autre caractéristique originale et avantageuse de l'invention, lesdites couches solides borées sont réalisées à base de nanoparticules de bore de granulométrie inférieure à 800 nm.

Plus particulièrement lesdites particules sont des particules poreuses, d'une porosité d'environ 50% ou de plus de 30%.

D'autres caractéristiques et avantages de la présente invention apparaîtront à la lecture de la description détaillée ci-après, de plusieurs exemples de mise en oeuvre non limitatifs, faite en référence aux figures annexées dans lesquelles :
- La figure 1 représente une vue schématique d'un appareil de détection selon l'invention présenté schématiquement comme une plaque creuse parallélépipédique,
- La figure 1A illustre schématiquement une coupe longitudinale selon le plan yOz d'un appareil de détection de neutrons connu dont l'enceinte 2 est parallélépipédique comme sur la figure 1.
- La figure 2, déjà commentée, illustre schématiquement trois phénomènes distincts d'émission d'une particule alpha pouvant apparaître dans un appareil de détection de neutrons du type compteur proportionnel à gaz.
- La figure 3, déjà commentée, illustre schématiquement l'émission de particules alpha et ⁷Li à l'opposé l'une de l'autre dans un appareil de détection de neutrons du type compteur proportionnel à gaz.
- La figure 4 illustre schématiquement un appareil de détection de neutrons selon l'invention constitué d'une plaque parallélépipédique creuse comme représentée figure 1 mais vu depuis une paroi latérale 26a c'est-à-dire dans le plan yOz. La figure 4 n'est pas stricto insu une coupe dans le plan yOz car le point d'entrée 2a dans le premier étage 20-1 de !a cavité 20 est positionné à un premier angle entre les parois latérales 25a et 26a tandis que la borne 33-1 est éloignée de 2a dans la direction Ox tel que montré figure 4B.
- La figure 4A représente une vue en coupe selon AA dans un plan xOz perpendiculaire médian du dispositif de la figure 4,
- La figure 4B représente une vue dans un plan xOy du premier étage 20-1 du dispositif de la figure 4,
- La figure 5 illustre schématiquement un autre appareil de détection de neutrons conforme à l'invention vu depuis une dite deuxième paroi latérale 26a dans le plan yOz d'un appareil parallélépipédique de la figure 1.
- La figure 7 représente une photographie de nanoparticule de bore 60 selon l'invention.

Le nouveau procédé de préparation de nanoparticule de bore (NPB) et de dépôt sur une plaque d'aluminium est décrit ci-après.

Le bore élémentaire, d'isotopie naturelle ou enrichi en bore 10, est disponible dans le commerce sous forme de poudre de granulométrie autour de 30 µm.

### 1. Méthodes habituelles de préparation de nano particules de bore :

Les boranes B₂H₆, B₄H₁₀ sont gazeux à pression ordinaire, B₅H₉, B₅H₁₁ et B₆H₁₀ sont des liquides volatils, B₁₀H₁₄ est solide. Il est à noter que tous les boranes sont inflammables et les plus légers d'entre eux dont le diborane, extrêmement toxique, réagissent spontanément avec l'air, souvent de façon explosive (éclair vert). Les méthodes habituelles de production de nano particules de bore utilisent les décompositions à haute température du diborane B₂H₆, ou de la vapeur du décaborane B₁₀H₁₄ transportée sous argon dans un tube de quartz chauffé à 900 °C.

D'autre part des nanofils de bore ont été obtenus par pulvérisation (RF magnetron sputtering) de bore pur (99,9%).

### 2. Nouvelle méthode de préparation de NPB à partir d'un alliage lithium-bore :

2.1 Protocole de préparation de l'alliage LiB : Un lingot, alliage à 70% en poids de lithium est préparé à partir de lithium très pur (99,94%) de la société Cogema et de bore de pureté 98%, granulométrie 44 µm de la société Alfa Aesar. La réaction est effectuée en tube d'acier inoxydable scellé sous argon. Ce dernier est chauffé dans un four horizontal, sous agitation rotative. La montée en température, de l'ambiante à 650 °C, s'effectue en quatre heures. Deux réactions exothermiques se produisent, l'une à 377°C correspondant à la formation du composé LiB₅, l'autre à 550°C, correspondant à la formation du composé LiB (∼Li_{1,06}B) et à sa cristallisation instantanée sous la forme d'un lingot d'une matrice fibreuse réfractaire de type éponge (qui ne fond pas en dessous de 1000°C) et de surcroît poreuse qui emprisonne l'excès de lithium. Si le composé LiB pur (39% en poids de Li) est pyrophorique et ne peut être manipulé à l'air, le lingot riche en lithium (70%) peut être utilisé sans inconvénient hormis celui d'oxyder très modérément le lithium protecteur. À la fin ces expérimentations, les inventeurs ont préparé des lingots à 50% en poids de lithium qui restent encore relativement inertes à l'air. En travaillant dans une atmosphère d'argon, on évite l'oxydation du lithium et une éventuelle explosion lors du transfert du LiB d'un tube à la solution aqueuse de l'étape 2.2 ci-après.

### 2.2 Protocole d'obtention des nano particules de bore :

Une hydrolyse est réalisée dans de l'eau distillée qui contient un dispersant anionique COATEX® GXCE ou encore un agent tensioactif de type polypropylène-polyoxyéthylène en très faible quantité (50 à 1000 ppm). L'alliage LiB produit du bore élémentaire sous forme amorphe (noir-marron), de l'hydroxyde de lithium (LiOH), réaction inévitablement accompagnée d'un dégagement d'hydrogène d'un certain volume de borane. Au contact de la solution aqueuse lithiée de pH élevé, la majeure partie de ce borane est transformé en borate de lithium, le reste se dilue dans l'atmosphère et est reconnaissable à son odeur très désagréable.

L'hydrolyse de LiB doit être effectuée sous argon avec un très fort barbotage permanent dans la solution contenant un dispersant. Les premières 26 expériences ont été effectuées en utilisant l'alliage à 70% en poids de lithium et 30% de Bore, et ont donné un rendement limité.

Seulement 20-28% du bore initial est converti en nano particules. Alors que l'alliage à 50% de Li a un rendement d'au moins 80%. L'évacuation des molécules d'hydrogène qui se libèrent lors de la réaction d'hydrolyse de LiB dans l'eau, par l'azote ou argon gazeux (barbotage violent) a permis d'obtenir l'efficacité de la conversion de LiB en NPB supérieure à 80% voire à 90%. L'hydrolyse est réalisée avec une injection d'ultrasons dans le bain d'hydrolyse, afin de réduire la taille des nanoparticules. Une densité de puissance ultrasonique de l'ordre de 350 W/L permet de réduire la taille des nanoparticules entre 200 nm et 300 nm. Un système de refroidissement doit alors être ajouté pour évacuer la chaleur générée par la puissance ultrasonore. Ce système de refroidissement est, par exemple, un système permettant un bain-marie ou un bullage par un gaz neutre.

Dans un mode préféré de réalisation, durant l'étape d'hydrolyse, on réalise un fort bullage de gaz inerte, de préférence argon, dans le bain d'hydrolyse. Les avantages de ce bullage sont multiples : limitation de la production de borane, évacuation de la chaleur, homogénéisation du bain.

### 2.3 Protocole de séparation de NPB de la solution basique aqueuse:

La réaction d'hydrolyse dure environ 30 à 40 minutes sous un fort barbotage à l'argon. Une fois la réaction finie, la séparation de NPB se fait par une filtration tangentielle.

La solution obtenue après hydrolyse est donc filtrée à travers une ou des membranes minérales tubulaires, par exemple, de longueur 25 mm, de diamètre interne de 8 mm et de surface membranaire efficace de 40 cm². La ou les membranes peuvent être, par exemple, en alumine avec une couche filtrante en oxyde de zirconium d'épaisseur 15 µm. La solution obtenue après chaque filtration peut être refiltrée après dilution dans l'eau distillée. Ainsi, 2 à 4 passes de filtration, par exemple, peuvent être effectuées. La filtration permet de concentrer les NPB d'un facteur 20 environ, sans concentrer la lithine ou hydroxyde de lithium (LiOH) qui est un sous produit de la synthèse des NPB. La dilution du concentrât, contenant les NPB, dans l'eau distillée permet de diminuer d'un facteur 20 la concentration de lithine. Deux passes de filtration/dilution dans l'eau distillée permettent de diminuer d'un facteur 400 la concentration de lithine, trois passes d'un facteur 8000, quatre passes d'un facteur 160 000, etc.

### 2.4 Évaluation quantitative d'efficacité réactionnelle s'effectue par le séchage de NPB de la suspension.

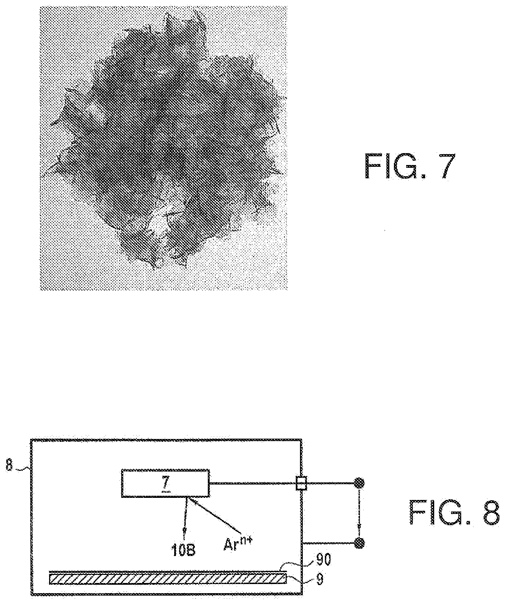

Les NPB ont été séchées à l'étuve réglée à 300°C. Les analyses thermogravimétriques montrent en effet que la porosité des NPB retient l'eau, et qu'une chauffe à 300 °C est nécessaire pour l'évaporer en quasi totalité. Après l'évacuation totale de l'eau, la pesée de NPB s'effectue à température ambiante et après avoir obtenu l'équilibre entre les NPB et la vapeur d'eau ambiante. Les particules de NPB obtenues sont représentées sur la figure 7.

Suite à la filtration tangentielle, les NPB obtenues subissent une étape de broyage mécanique afin de réduire leur dimension. Cette étape de broyage comprend au moins une étape de séchage des NPB par évaporation sous vide, puis une étape de mise en suspension des NPB dans un solvant non oxygéné et une étape de broyage des NPB dans le solvant non oxygéné dans un broyeur planétaire, par exemple, et enfin une étape de séchage des NPB par évaporation sous vide. De façon non limitative, l'étape de broyage peut réduire la taille des NPB d'un facteur de 2 à 3.

### 2.5 Analyses chimiques des NPB

Les analyses chimiques effectuées sur 5 différents échantillons montrent que la quantité de Bore dans la masse d'une NPB est au moins de 92%.
2.6 Dépôt de NPB sur les deux surfaces de 3 plaques d'aluminium destinées à constituer des parois intercalaires 4 d'appareil de détection décrit à l'exemple 2, et sur une face de chacune des 2 parois principales 22a et 22b de l'appareil de détection 1 décrit à l'exemple 2.

Avant dépôt de particules de NPB sur la surface d'aluminium, on a dégraissé les plaques d'aluminium par le traitement à l'acétone et par la suite elles ont été conservées dans l'éthanol pur.

Avant dépôt, Ses plaques ont été séchées à 80° C. Sur les plaques encore à température relativement élevée, les NPB ont été délayées à la main en utilisant une pipette. Il faut remarquer qu'avant dépôt, les NPB ont été soniquées (soumises à des ultra sons) pendant 30 minutes. Une fois le dépôt réalisé, l'évaporation d'éthanol de la surface d'aluminium étant finie, la quantité de NPB a été estimée par pesée à une densité surfacique de 0,3 mg/cm² à 0,5 mg/cm².

### 3. Procédé de dépôt par pulvérisation cathodique

Un second procédé de dépôt d'une couche solide de bore sur un support, dit de pulvérisation cathodique, comporte les étapes suivantes en référence à la figure 8 :
- on place une cible 7, à savoir un bloc de bore 10, dans un réacteur 8 contenant un gaz neutre tel que de l'argon ;
- on applique une différence de potentiel entre la cible 7 et les parois du réacteur 8 au sein d'une atmosphère raréfiée permettant la création d'un plasma froid.

Sous l'effet du champ électrique, les espèces positives du plasma (ions d'argon) se trouvent attirées par la cathode (cible 7 en bore 10) et entrent en collision avec cette dernière. Leur impact, provoque ainsi la pulvérisation des atomes de la cible sous forme de particules neutres qui se condensent sur le support 9 formant ainsi une couche solide de bore 10 sur ce support 9.

### Exemple d'utilisation : appareil de détection de neutrons

En référence aux figures 1 à 5 et 7, un appareil de détection de neutrons 1 du type compteur proportionnel à gaz et comporte :
- une enceinte 2 formant cathode et délimitant intérieurement une cavité 20 fermée et remplie d'un gaz, tel qu'un mélange gazeux Argon (Ar) / Dioxyde de carbone (CO₂) en proportion 90 / 10 ; et
- un dispositif formant anode 3 s'étendant en partie à l'intérieur de ladite enceinte 2, autrement dit à l'intérieur de ladite cavité 20 tel que décrit plus loin. L'anode est un fil métallique (typiquement tungstène) de petit diamètre (moins de 100 µm).

L'enceinte 2 est réalisée dans un matériau dont le numéro atomique est inférieur à 20, de préférence dans un matériau métallique comme par exemple en aluminium, et comporte :
- un corps creux 21 formé par une enceinte 2 parallélépipédique à 6 faces présentant deux parois principales 22a, 22b planes et parallèles entre elles, s'étendant selon un plan xOy, ces parois principales 22a 22b présentant respectivement des surfaces internes 23 planes, parallèles entre elles et recouvertes chacune d'une couche solide de bore 24 réalisée selon le procédé décrit à l'exemple 1 ;
- deux premières parois latérales 25a et 25b relient les bords 25 opposés des parois principales 22a et 22b en vis-à-vis dans la direction Oy, s'étendant selon un plan xOz, et deux deuxièmes parois latérales 26a et 26b relient les bords opposés des parois principales 22a 22b dans la direction Ox, lesdites parois latérales 26a et 26b s'étendant dans des plans yOz.

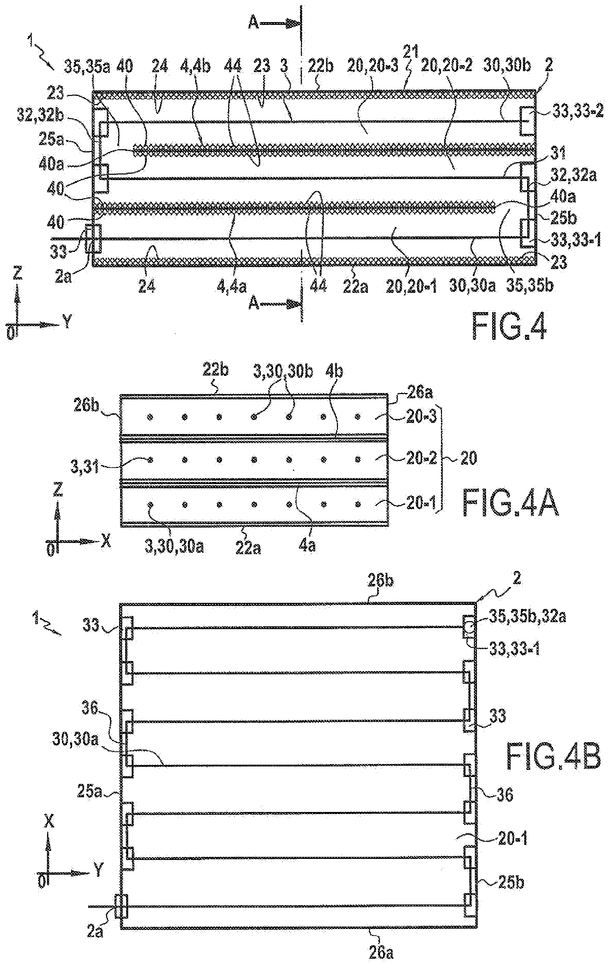

Sur les figures 4, 4A et 4B, l'appareil de détection de neutrons 1 comprend une ou plusieurs parois intercalaires 4, 4a-4b, formant cathode, fixées sur l'enceinte 2 et s'étendant à l'intérieur de l'enceinte 2, autrement dit à l'intérieur de la cavité 20, de façon parallèle aux parois principales 22a et 22b et à leurs surfaces internes 23 du corps creux 21. La ou chaque paroi intercalaire 4 présente deux surfaces planes et opposées 40 en regard des surfaces internes 23 respectives des parois principales 22a et 22b du corps creux 21, où chaque surface plane 40 est recouverte d'une couche solide de bore 44.

Dans une variante non illustrée, le dispositif formant anode 3 est divisé en plusieurs anodes distinctes afin de répondre à des contraintes de limitation de l'électronique et/ou à des applications à fort taux de comptage et/ou à des applications nécessitant la localisation des neutrons.

Concernant les couches solides de bore 24, 44, elles répondent aux caractéristiques suivantes comme décrit à l'exemple 1 :
- densité surfacique comprise entre environ 0,03 et environ 0,5 mg/cm2 ;
- enrichissement des couches 24, 44 en bore 10, avec de préférence une teneur en bore 10 comprise entre environ 90 et 100% ;
- recouvrement éventuel des couches 24, 44 avec une couche de métal, de préférence aluminium, de densité surfacique inférieure à 0,01 mg/cm2 ;
- les couches 24, 44 sont réalisées à base de bore 10 élémentaire, et notamment à base de nanoparticules de bore de granulométrie inférieure à 0,8 µm, de préférence inférieure à 0,3 µm,

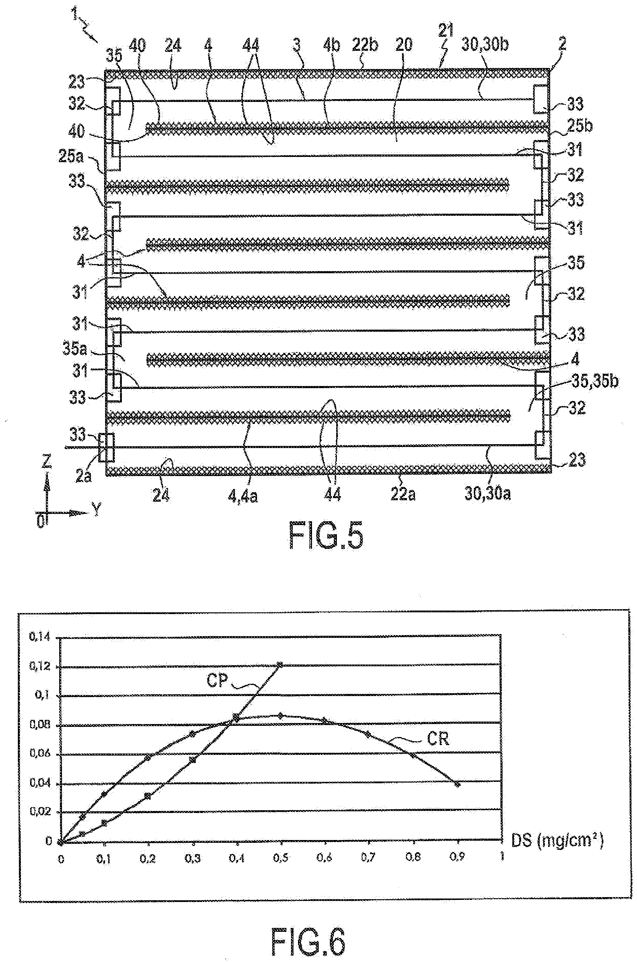

La figure 6 illustre la variation du rendement (courbe CR) et des pertes (courbe CP) dans une paire de couches solides de bore en fonction de la densité surfacique DS de cette couche exprimée en mg/cm². On note que le rendement est maximal pour un dépôt de 0,5 mg/cm² mais que les pertes augmentent avec la densité surfacique DS. Ainsi, cette densité de 0,5 mg/cm² n'est pas optimale, parce que plus le dépôt est épais et plus les pertes de neutrons sont importantes ; pour rappel les pertes de neutrons correspondent à la proportion des neutrons incidents capturés, mais non détectés et ces pertes sont estimées à partir du rendement théorique qu'apporterait la quantité de bore 10 présente. En conséquence, la densité surfacique des couches 24, 44 est inférieure à 0,5 mg/cm².

L'appareil 1 illustré en figures 4, avec toutefois 4 paires de couches au lieu de 3, est bien adapté pour équiper un système de quantification de plutonium dans un fût de déchets radioactifs dont le volume est typiquement de l'ordre de 200 litres.

Le rendement d'un appareil 1 de la figure 4 à 4 paires de couches (8 couches) 24, 44, dans lequel les couches 24, 44 présentent une densité surfacique égale à 0,2 mg/cm², est de 20% avec 10% de pertes ; autrement dit sur 100 neutrons incidents, 20 neutrons sont détectés, 10 neutrons sont capturés mais non détectés, et 70 neutrons traversent l'appareil 1.

Autre exemple d'utilisation des nanoparticules obtenues selon le procédé.

Les nanoparticules telles que préparées comme dans l'étape a) peuvent être également utilisé comme adjuvant au combustible de missiles. Le bore est de préférence du bore naturel pour être utilisé comme adjuvant dans le combustible destiné à la propulsion de missiles. Le bore présente en effet la particularité d'avoir une chaleur de combustion volumique supérieure à celles de tous les autres éléments et composés : 130 MJ/L pour 34 MJ/L à 39 MJ/L dans les combustibles classiques de missiles. Mais il faut qu'il soit sous forme extrêmement divisée pour que la combustion soit efficace. La taille des nanoparticules doit être, de préférence inférieure ou égale à 100 nm.

## Revendications

1. Procédé de préparation de nanoparticules de bore (NPB) **caractérisé en ce qu'**il comprend au moins les étapes suivantes ;
a-1) synthèse d'un composé intermétallique bore/lithium LiB par réaction d'un mélange de bore et de lithium dans un réacteur et sous un chauffage de l'ordre de 650°C ; et
a-2) transfert et hydrolyse du composé intermétallique bore/lithium afin de réaliser des nanoparticules de bore, par immersion dans un bain contenant de l'eau à température ambiante, sous atmosphère de gaz neutre tel que de l'argon ; et
a-3) séparation des nanoparticules de bore, notamment par filtration et/ou centrifugation, avec les autres composés issus de la réaction d'hydrolyse ; et **en ce que** à l'étape a-2), le bain d'hydrolyse est soumis à des ultrasons.

2. Procédé selon la revendication 1, **caractérisé en ce que** :
- à l'étape a-1) la proportion de bore dans le mélange bore lithium introduit dans ledit réacteur est compris entre 39% et 50%.

3. Procédé selon l'une des revendications 1 et 2, **caractérisé en ce que** :
- à l'étape a-2) on réalise un barbotage de gaz neutre de préférence d'argon dans le bain d'hydrolyse.

4. Procédé selon l'une des revendications 1 à 3, **caractérisé en ce que** à l'étape a-2) ledit bain contient de l'eau et un agent dispersant de préférence anionique, à une concentration massique de 50 à 1000 ppm pour limiter la croissance des nanoparticules.

5. Procédé selon l'une des revendications 1 à 4, **caractérisé en ce que** la séparation des nanoparticules avec les autres composés issus de la réaction d'hydrolyse est réalisée par filtration tangentielle, de préférence en 1 à 4 étapes de concentration successives.

6. Procédé selon l'une des revendications 1 à 5, **caractérisé en ce que** à l'issue de l'étape a-3) lesdites nanoparticules de bore présentent une taille de 100 nm à 800 nm et lesdites nanoparticules sont des particules poreuses, d'une porosité de l'ordre de 50% ou de plus de 30%.

7. Procédé selon l'une des revendications 1 à 6, **caractérisé en ce que** l'étape a-3) de séparation des NPB est suivie d'une étape de broyage mécanique pour réduire la dimension des NPB comprenant au moins :
- une étape de séchage des NPB par évaporation sous vide ;
- une étape de mise en suspension des NPB dans un solvant non oxygéné ;
- une étape de broyage des NPB dans le solvant non oxygéné ;
- une étape de séchage des NPB par évaporation sous vide.

8. Utilisation des nanoparticules de bore préparées selon les revendications 1 à 7 pour le dépôt d'une couche solide de bore sur un support constitué d'une paroi ou surface (22a, 22b, 23, 4, 40) de détecteur de neutrons pour la préparation d'une paroi ou surface recouverte d'une couche solide borée pour un détecteur de neutron, **caractérisée en ce qu'**elle comporte les étapes suivantes :
b) fabrication d'une suspension borée par mise en suspension des nanoparticules de bore dans un solvant volatil de préférence de l'éthanol ou acétone, et de préférence encore ajout d'un agent tensioactif assurant la fonction de colle pour les nanoparticules ;
c) dépôt ou projection sur ledit support (22a, 22b, 23, 4, 40) d'un film liquide de ladite suspension borée ;
d) séchage de ladite suspension borée, notamment par chauffage.

9. Utilisation des nanoparticules de bore préparées selon les revendications 1 à 7 comme additif pour combustible de missile, **caractérisée en ce qu'**elle comporte l'étape de mélange dans une proportion déterminée des nanoparticules de bore avec une poudre de combustion.

## Patentansprüche

1. Verfahren zur Herstellung von Bornanopartikeln (NPB), **dadurch gekennzeichnet, dass** es wenigstens die folgenden Schritte beinhaltet:
a-1) Synthetisieren einer intermetallischen Bor/Lithium-LiB-Zusammensetzung durch Umsetzen eines Gemischs aus Bor und Lithium in einem Reaktor unter Erhitzung bei etwa 650°C; und
a-2) Übertragen und Hydrolysieren der intermetallischen Bor/Lithium-Zusammensetzung zum Erzeugen von Bornanopartikeln durch Eintauchen in ein Bad, das Wasser mit Umgebungstemperatur enthält, unter einer neutralen Gasatmosphäre wie Argon; und
a-3) Abscheiden der Bornanopartikel, insbesondere durch Filtration und/oder Zentrifugation, mit den anderen bei der Hydrolysereaktion entstandenen Verbindungen; und dadurch, dass in Schritt a-2) das Hydrolysebad Ultraschall ausgesetzt wird.

2. Verfahren nach Anspruch 1, **dadurch gekennzeichnet, dass**:
- in Schritt a-1) der Boranteil in dem in den Reaktor eingeleiteten Bor/Lithium-Gemisch 39 % bis 50 % beträgt.

3. Verfahren nach einem der Ansprüche 1 und 2, **dadurch gekennzeichnet, dass**:
- in Schritt a-2) ein neutrales Gas, vorzugsweise Argon, in das Hydrolysebad eingeleitet wird.

4. Verfahren nach einem der Ansprüche 1 bis 3, **dadurch gekennzeichnet, dass** in Schritt a-2) das genannte Bad Wasser und ein vorzugsweise anionisches Dispersionsmittel mit einer Massekonzentration von 50 bis 1000 ppm enthält, um das Wachstum der Nanopartikel zu begrenzen.

5. Verfahren nach einem der Ansprüche 1 bis 4, **dadurch gekennzeichnet, dass** die Abscheidung von Nanopartikeln mit den anderen bei der Hydrolysereaktion entstandenen Verbindungen durch tangentielle Filtration vorzugsweise in 1 bis 4 aufeinander folgenden Konzentrationsstufen realisiert wird.

6. Verfahren nach einem der Ansprüche 1 bis 5, **dadurch gekennzeichnet, dass** am Ende von Schritt a-3) die genannten Bornanopartikel eine Größe von 100 nm bis 800 nm haben und die genannten Nanopartikel poröse Partikel mit einer Porosität von etwa 50 % oder mehr als 30 % sind.

7. Verfahren nach einem der Ansprüche 1 bis 6, **dadurch gekennzeichnet, dass** auf Schritt a-3) des Abscheidens von NPB ein Schritt des mechanischen Zermahlens zum Reduzieren der Größe der NPB folgt, der wenigstens Folgendes beinhaltet:
- einen Schritt des Trocknens der NPB durch Vakuumverdampfung;
- einen Schritt des Suspendierens der NPB in einem nicht sauerstoffhaltigen Lösungsmittel;
- einen Schritt der Zerkleinerns der NPB in dem nicht sauerstoffhaltigen Lösungsmittel;
- einen Schritt des Trocknens der NPB durch Vakuumverdampfung.

8. Verwendung der gemäß den Ansprüchen 1 bis 7 hergestellten Bornanopartikel zum Absetzen einer festen Borschicht auf ein Substrat, gebildet aus einer Wand oder Oberfläche (22a, 22b, 23, 4, 40) eines Neutronendetektors, zur Herstellung einer mit einer festen Borschicht bedeckten Wand oder Oberfläche für einen Neutronendetektor, **dadurch gekennzeichnet, dass** es die folgenden Schritte beinhaltet:
b) Herstellen einer Borsuspension durch Suspendieren der Bornanopartikel in einem flüchtigen Lösungsmittel, vorzugsweise Ethanol oder Aceton, und vorzugsweise Zugeben eines Tensids, das die Klebefunktion für die Nanopartikel gewährleistet;
c) Absetzen oder Projizieren eines flüssigen Films der genannten Borsuspension auf das genannte Substrat (22a, 22b, 23, 4, 40);
d) Trocknen der Borsuspension, insbesondere durch Erhitzen.

9. Verwendung der gemäß den Ansprüchen 1 bis 7 hergestellten Bornanopartikel als Additiv für Raketenbrennstoff, **dadurch gekennzeichnet, dass** sie den Schritt des Mischens von Bornanopartikeln mit einem Brennstoffpulver in einem vorbestimmten Verhältnis beinhaltet.

## Claims

1. Method for the preparation of boron nanoparticles (BNP), **characterised in that** it comprises at least the following steps:
a-1) synthesis of a boron/lithium intermetallic compound, LiB, by reaction of a mixture of boron and lithium in a reactor with heating of the order of 650°C; and
a-2) transfer and hydrolysis of the boron/lithium intermetallic compound in order to produce boron nanoparticles, by immersion in a bath containing water at ambient temperature, in an atmosphere of inert gas such as argon; and
a-3) separation of the boron nanoparticles, in particular by filtration and/or centrifuging, from the other compounds resulting from the hydrolysis reaction; and
**in that** in step a-2) the hydrolysis bath is subjected to ultrasound.

2. Method according to claim 1, **characterised in that**:
- in step a-1) the proportion of boron in the boron/lithium mixture introduced into said reactor is between 39% and 50%.

3. Method according to one of claims 1 and 2, **characterised in that**:
- in step a-2) sparging with inert gas, preferably argon, in the hydrolysis bath is carried out.

4. Method according to one of claims 1 to 3, **characterised in that** in step a-2) said bath contains water and a dispersant, preferably anionic, at a mass concentration from 50 to 1000 ppm in order to limit the growth of nanoparticles.

5. Method according to one of claims 1 to 4, **characterised in that** separation of the nanoparticles from the other compounds resulting from the hydrolysis reaction is carried out by tangential filtration, preferably in 1 to 4 successive steps of concentration.

6. Method according to one of claims 1 to 5, **characterised in that** at the end of step a-3) said boron nanoparticles have a size from 100 nm to 800 nm and said nanoparticles are porous particles, having a porosity of the order of 50% or more than 30%.

7. Method according to one of claims 1 to 6, **characterised in that** step a-3) of separation of the BNP is followed by a step of mechanical grinding in order to reduce the dimension of the BNP comprising at least:
- a step of drying the BNP by vacuum evaporation;
- a step of suspending the BNP in a non-oxygenated solvent;
- a step of grinding the BNP in the non-oxygenated solvent;
- a step of drying the BNP by vacuum evaporation.

8. Use of the boron nanoparticles prepared according to claims 1 to 7 for depositing a solid boron layer on a substrate consisting of a wall or surface (22a, 22b, 23, 4, 40) of a neutron detector for the preparation of a wall or surface covered with a solid boronated layer for a neutron detector, **characterised in that** it comprises the following steps:
b) manufacture of a boronated suspension by suspending the boron nanoparticles in a volatile solvent, preferably ethanol or acetone, and preferably also addition of a surface active agent performing the function of glue for the nanoparticles;
c) deposition or spraying of a liquid film of said boronated suspension onto said substrate (22a, 22b, 23, 4, 40);
d) drying of said boronated suspension, in particular by heating.

9. Use of the boron nanoparticles prepared according to claims 1 to 7 as an additive for missile fuel, **characterised in that** it comprises the step of mixing in a given proportion of the boron nanoparticles with a combustion powder.
